# NEW EUROPEAN PATENT SPECIFICATION

(11) **EP 0 188 933 B2**
(45) Date of publication and mention of the opposition decision: **31.01.1996**
(45) Mention of the grant of the patent: 07.03.1990
(21) Application number: 85402386.8
(22) Date of filing: 03.12.1985
(51) Int. Cl.: A01N 43/653

(54) **Method for regulating the growth of tulip**
Verfahren zur Regulierung des Wachstums von Tulpen
Procédé de régulation de la croissance des tulipes

(30) Priority: 14.12.1984 JP 265131/84; 14.12.1984 JP 265132/84; 21.12.1984 JP 271182/84
(43) Date of publication of application: 30.07.1986
(73) Proprietor: SUMITOMO CHEMICAL COMPANY, LIMITED, Chuo-ku Osaka 541 (JP)
(72) Inventor: Izumi, Kazuo, Ashiya-shi Hyogo 659 (JP); Sakaki, Masaharu, Toyonaka-shi Osaka 561 (JP)
(74) Representative: Bourgognon, Jean-Marie

(56) References cited:
- EP-A- 0 015 387
- DE-A- 3 045 182
- GB-A- 2 046 260
- CHEMICAL ABSTRACTS, vol. 99, no. 15, 10th October 1983, page 242, no. 117727c, Columbus, Ohio, US; R. MENHENETT et al.: "Comparison of a new triazole retardant PP 333 with ancymidol other compounds on pot-grown tulips"
- Amer. Soc. for Horticult. Science, Part 3, Sec. 2, Vol 19, Abstr. 490, 1984

## Description

This invention relates to a method for regulating the growth of tulip by using at least one of the triazole derivatives or optical isomers thereof having the following formula: 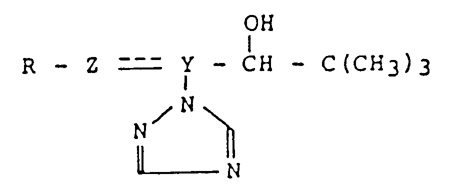
wherein 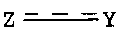
is a 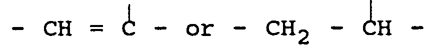
group and R is a p-chlorophenyl or cyclohexyl group, and when 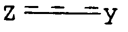
is a 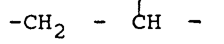
group, R is a p-chlorophenyl group, which comprises immersing the bulb of tulip into a solution of said at least one of the triazole derivatives, characterized in that said solution is an aqueous solution containing said at least one of the triazole derivatives in an amount appropriate for preventing the over-growth of tulip or for regulating the dwarfing of tulip, and the immersion is carried out for one min. - 24 hours.
The triazole derivatives are the following triazole derivatives: (E)-1-(4-chlorophenyl)-4,4-dimethyl-2-(1,2,4-triazol-1-yl)-1-penten-3-ol (hereinafter referred to as Compound A), (E)-1-cyclohexyl-4,4-dimethyl-2-(1,2,4-triazol-1-yl)-1-penten-3-ol (hereinafter referred to as Compound B), and 1-(4-chlorophenyl)-4,4-dimethyl-2-(1,2,4-triazol-1-yl)-pentan-3-ol (hereinafter referred to as Compound C).

Tulip is the most popular and marketable bulbous plant, and is cultivated on large area. It, however, has some problems, when cultivated in a flower garden or pot, such as the over-growth of the scape with hanging-down of the flower head, which often occurs by, for example, the rise in temperature at early spring. As a counterplan, the soil treatment with a dwarfing agent, Ancymidol (alpha-cyclopropyl-alpha-(p-methoxyphenyl)-5-pyrimidine-methanol), has been found to be an effective method against the overgrowth. (M. Snel and E. Eysel; Proceedings 12th British Weed Control Conference (1974): 115-122). This method, however has some disadvantages. For example, the affect for preventing the over-growth of tulip is sometimes unsettled if treated at a certain time of its growth stage. In the case of potted tulip, it is very laborious, as it requires individual pot injection of the liquid of a prescribed amount and concentration, and so forth. In Chemical Abstracts, vol. 99 No. 117727c soil drenching of tulip; with triazole derivatives is disclosed.

The method has been desired, in which the plant body of tulip is dwarfed in some degree, so as to beautifully arrange a flower garden, or to obtain a compact pot flower.

Moreoever, environmental pollution caused by agricultural chemicals is at issue today, so that the method has been desired, by which effective growth regulation can be achieved with a small dose.

The inventors have made an investigation for a convenient and reliable method to regulate or control the growth of tulip using an agent in a small dose, and have accomplished the present invention from the findings that the growth of tulip, especially the scape of tulip, can easily be regulated with a small dose, by immersing the bulb into an aqueous solution of at least one kind of the compound selected from Compound A (GB2046260A, Japanese KOKAI 56-25105), Compound B (Japanese KOKAI 55-111477) and Compound C (Japanese KOKAI 53-28170), followed by planting the treated bulb.

Compound A, compound B and compound C have optical isomers with respect to asymmetric carbon atoms, respectively, all of which are covered within the scope of the invention.

More detailed explanation of the present method will be given below.

According to the method of the present invention, the bulb of tulip is immersed into an aqueous solution containing 1-500 ppm, preferably, 5-100 ppm (in case of Compound A), 1-5000 ppm, more preferably 50-1000 ppm (in the case of Compound B), 1-2000 ppm, more preferably, 10-500 ppm (in the case of Compound C), or 1-5000 ppm, more preferably 5-1000 ppm (in the case of a mixture of two or three of Compounds A, B and C), of the triazole compound for one minute to twenty four hours, or more preferably, for five minutes to one hour, prior to the planting of the bulb, although the conditions depend on the cultivars, environment, forms of formulations, mixing ratio of the active ingredients, etc.

The above treatment makes it possible to raise the quality of tulip, by not only easily regulating the growth, or preventing the over-growth of tulip, mainly at the scape of tulip, but also making the scape thick and strong.

The aqueous solution of Compound A, B and/or C is obtained by dissolving the compound in an organic solvent, such as methanol, ethanol, acetone and acetonitrile, and then diluting the organic solution with water. Moreover, the aqueous solution can also be obtained by mixing Compound A, B and/or C with a carrier or adjuvant to make a wettable powder, emulsion, flowable formulation, liquid, or other forms of formulations which are conventionally employed for plant growth regulators, and then diluting it with water.

When immersing the bulb in the aqueous solution of Compound A, B and/or C, the bulb may be treated together with an insecticide, fungicide, plant growth regulator, etc.

The following is an example of the testing results, showing the effectiveness of the present method for regulating the growth of tulip.

### Example 1

Bulbs of tulip (Golden Harvest) were kept cold at 5 degree C for about two months, and each of them was immersed for the prescribed period of time in an aqueous solution of Compounds A, B, or C, a mixture or two or three of them, or of Ancymidol, having the prescribed concentration. After taken out of the solution and air-dried, the bulbs were planted in plastic pots (size #6), and were cultivated in a greenhouse whose inside atmosphere was kept at 22 degree C to 27 degree C. Each test was tripled, and the length of scapes were measured at the time of flowering (a month after the planting), with the calculation of the average length for each treatments.

The results are shown in Table 1, where the length of scapes are given in the percentages against that of the untreated control

**TABLE 1**

| Compound | Concentration of aqueous solutions (ppm) | Immersing time (min.) | Length of scapes (% of untreated control) |
|---|---|---|---|
| Compound A | 10 | 20 | 65 |
| | | 40 | 52 |
| | 20 | 20 | 56 |
| | | 40 | 44 |
| Compound B | 50 | 20 | 76 |
| | | 40 | 60 |
| | 100 | 20 | 58 |
| | | 40 | 49 |
| Compound C | 40 | 20 | 68 |
| | | 40 | 55 |
| | 80 | 20 | 57 |
| | | 40 | 47 |
| Compound A + Compound C (1:1) | 20 | 20 | 69 |
| | | 40 | 53 |
| | 50 | 20 | 57 |
| | | 40 | 46 |
| Compound A + Compound B + Compound C (1:1:1) | 30 | 20 | 71 |
| | | 40 | 56 |
| | 60 | 20 | 57 |
| | | 40 | 47 |
| Ancymidol | 50 | 20 | 98 |
| | | 40 | 94 |
| | 100 | 20 | 73 |
| | | 40 | 64 |
| Untreated control | - | - | 100 |

## Claims

1. A method for regulating the growth of tulip by using at least one of the triazole derivatives or optical isomers thereof having the following formula: 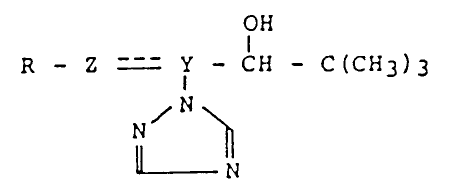 wherein 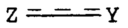 is a 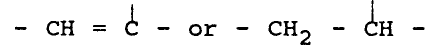 group and R is a p-chlorophenyl or cyclohexyl group, and when 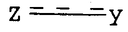 is a 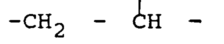 group, R is a p-chlorophenyl group, which comprises immersing the bulb of tulip into a solution of said at least one of the triazole derivatives, characterized in that said solution is an agueous solution containing said at least one of the triazole derivatives in an amount appropriate for preventing the over-growth of tulip or for regulating the dwarfing of tulip, and the immersion is carried out for one min. - 24 hours.

2. A method according to the claim 1, wherein the triazole derivative is (E)-1-(4-chlorophenyl)-4,4-dimethyl-2-(1, 2, 4-triazol-1-yl)-1-penten-3-ol, and said amount is 1 - 500 ppm.

3. A method according to the claim 1, wherein the triazole derivative is (E)-1-cyclohexyl-4,4-dimethyl-2-(1, 2, 4-triazol-yl)-1-penten-3-ol, and said amount is 1 - 5000 ppm.

4. A method according to the claim 1, wherein the triazole derivative is 1-(4-chlorophenyl)-4, 4-dimethyl-2-(1, 2, 4-triazol-1-yl)-pentan-3-ol, and said amount is 1 - 2000 ppm.

## Patentansprüche

1. Verfahren zum Regulieren des Wachstums von Tulpen unter Verwendung mindestens eines Triazolderivates oder eines optischen Isomers davon mit der folgenden Formel: 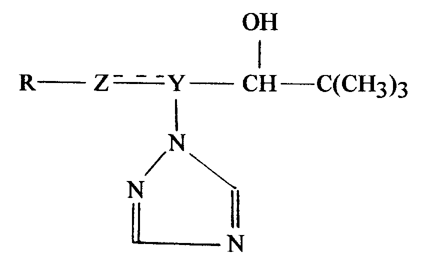 wobei 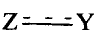 eine 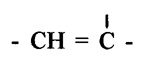 oder eine 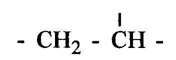 Gruppe und R eine p-Chlorphenyl- oder Cyclohexyl-Gruppe ist, wobei, wenn 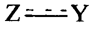 eine 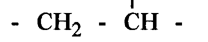 Gruppe ist, R eine p-Chlorphenyl-Gruppe ist, das das Eintauchen der Tulpenzwiebel in eine Lösung mindestens eines der Triazolderivate umfaßt, dadurch gekennzeichnet, daß die Lösung eine wässrige Lösung ist, die mindestens ein Triazolderivat in einer geeigneten Menge zum Verhindern eines übermäßigen Wachstums oder mm Regulieren eines Zwergwuchses der Tulpe enthält und daß das Eintauchen während einer Minute bis 24 Stunden erfolgt.

2. Verfahren gemäß Anspruch 1, wobei das Triazolderivat (E)-1-(4-chlorphenyl)-4,4-dimethyl-2-(1,2,4-triazol-1-yl)-1-penten-3-ol ist und die Menge 1 bis 500 ppm beträgt.

3. Verfahren gemäß Anspruch 1, wobei das Triazolderivat (E)-1-cyclohexy-4,4-dimethy-2-(1,2,4-triazol-1-yl)-1-penten-3-ol ist und die Menge 1 bis 5000 ppm beträgt.

4. Verfahren gemäß Anspruch 1, wobei das Triazolderivat 1-(4-chlorphenyl)-4,4-dimethy-2-(1,2,4-triazol-1-yl)-pentan-3-ol ist und die Menge 1 bis 2000 ppm beträgt.

## Revendications

1. Procédé de régulation de la croissance de la tulipe en utilisant au moins l'un des dérivés de triazole ou de ses isomères optiques ayant la formule suivante : 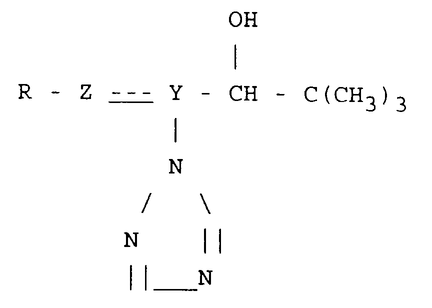 dans laquelle 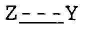 est un groupe 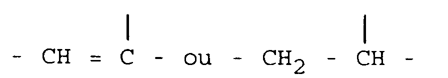 et R est un groupe p-chlorophényle ou cyclohexyle, et quand 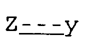 est un groupe 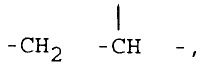 R est un groupe p-chlorophényle, qui consiste à immerger le bulbe de la tulipe dans une solution dudit au moins un des dérivés de triazole, caractérisé en ce que la solution est une solution aqueuse contenant ledit au moins un des dérivés de triazole en une quantité propre à empêcher la surcroissance de la tulipe ou à réguler la nanisation de la tulipe, et l'immersion est effectuée pendant une minute à 24 heures.

2. Procédé suivant la revendication 1, dans lequel le dérivé de triazole est le (E)-1-(4-chlorophényl)-4,4-diméthyl-2-(1,2,4-triazol-1-yl)-1-pentène-3-ol, et la quantité est de 1 à 500 ppm.

3. Procédé suivant la revendication 1, dans lequel le dérivé de triazole est le (E)-1-cyclohexyl-4,4,-diméthyl-2-(1,2,4-triazol-yl)-1-pentène-3-ol, et la quantité est de 1 à 5000 ppm.

4. Procédé suivant la revendication 1, dans lequel la dérivée de triazole est le 1-(4-chlorophényl)-4,4-diméthyl-2-(1, 2, 4-triazol-1-yl)-pentane-3-ol, et la quantité est de 1 à 2000 ppm.
